# EUROPÄISCHE PATENTSCHRIFT

(11) **EP 1 745 927 B1**
(45) Veröffentlichungstag und Bekanntmachung des Hinweises auf die Patenterteilung: **09.06.2010**
(21) Anmeldenummer: 05015516.7
(22) Anmeldetag: 18.07.2005
(51) Int. Cl.: B41F 13/22, B41F 27/10, B44B 5/00, B29C 59/04, B29C 43/52, B29C 33/02, B29C 43/46

(54) **Druckzylinder mit abnehmbarer Prägeform**
Printing roll with detachable printing sleeve
Cylindre d'impression comportant une chemise détachable

(43) Veröffentlichungstag der Anmeldung: 24.01.2007
(73) Patentinhaber: Hueck Folien Ges.m.b.H., 4342 Baumgartenberg (AT)
(72) Erfinder: Trassl, Stephan, 95478 Kemnath (DE); Reich, Peter, 92712 Pirk (DE); Kuchenreuther, Hubert, 92637 Weiden (DE)
(74) Vertreter: Landgraf, Elvira

(56) Entgegenhaltungen:
- EP-A- 0 196 443
- EP-A- 0 295 319
- EP-A- 0 607 552
- EP-A- 0 842 773
- EP-A- 1 213 073
- US-A- 4 377 336

## Beschreibung

Die Erfindung betrifft einen oberflächenstrukturierten Spannzylinder, der vorzugsweise temperierbar ist.

Spannzylinder zur Aufnahme und Befestigung einer zylindrischen Prägeform, mit der strukturierte Oberflächen hergestellt werden können, sind bekannt.

Um eine gute Prägequalität bei geringsten Toleranzen zu gewährleisten wird üblicherweise ein Spannzylinder zum Befestigen einer entsprechenden Matrize (Prägematrize) verwendet. Aus der EP 1 213 073 A ist ein Spannzylinder bekannt, der zur Aufnahme einer zylindrischen Prägeform zur Herstellung von strukturierten Oberflächen geeignet ist.
Durch diese Vorrichtung wird auch eine Temperierung der Prägeform und eine einfache Befestigung und Justierung der Prägeform auf dem Spannzylinder ermöglicht.

Beim Aufziehen der Matrize auf den Spannzylinder können jedoch trotz ausreichender Vorsichtsmaßnahmen (Staubfreiheit) etc. dennoch kleinste Staubkörner oder Fremdkörperpartikel zwischen Prägematrize und Spannzylinder gelangen bzw. in die Prägematrize transportiert werden. Diese Fremdkörper verursachen Kratzer in der Prägematrize oder Druckstellen beim Abformen der Prägestruktur, die dann im Endprodukt sichtbar sind.

Aufgabe der Erfindung war es, die oben erwähnten Nachteile zu beseitigen. Diese Aufgabe wurde durch den Spannzylinder gemäss den Merkmalen des anliegenden Anspruchs 1 gelöst.
Eine weitere Aufgabe der Erfindung war es einen derartigen Spannzylinder, der auch für Heißprägevorgänge geeignet ist bereitzustellen.

Gegenstand der Erfindung ist daher ein Spannzylinder, dadurch gekennzeichnet, dass der Spannzylinder eine strukturierte Oberfläche aufweist.

Der Spannzylinder besteht aus einem Innen- und einem Außenzylinder. Im Zylindermantel sind Bohrungen vorhanden, die wenigstens teilweise mit durch das Innere des Zylinders führende Leitungen verbunden sind, die an eine Druckluftquelle anschließbar sind. Im Inneren des Zylindermantels ist ein Hohlraum vorgesehen, durch den ein Temperiermedium, beispielsweise Wasser, Thermoöl und dergleichen transportiert und spiralförmig um den Innenzylinder geführt werden kann, wobei das Temperiermedium über Zu- und Auslassleitungen umgewälzt wird.

Als Fluid wird vorzugsweise ein Thermoöl verwendet. Thermoöle oder Wärmeträgeröle können bei Temperaturen von etwa - 5 bis + 300°C verwendet werden. Daher kann auch eine für Heißprägevorgänge geeignete Temperatur von etwa 200°C erreicht werden.

Der erfindungsgemäße Spannzylinder weist eine strukturierte Oberfläche auf, das heißt, es werden Vertiefungen in die Oberfläche des Zylinders eingebracht. Dies kann durch alle bekannten Gravurverfahren, beispielsweise mittels Lasergravurverfahrens, eines Elektronenstrahlgravurverfahrens, eines gegebenenfalls gleichspannungsmodulierten Diamantstichelgravurverfahrens, eines Laserablationsverfahrens, Haschurenrasterung und dergleichen erfolgen. Die strukturierte Oberfläche kann femer durch Belichten und Ätzen der Zylinderoberfläche hergestellt werden

Aufgrund der erfindungsgemäßen Konstruktion des Spannzylinders ist es möglich den Spannzylinder und somit auch eine auf dem Zylinder montierte Prägeform zu kühlen bzw. zu erwärmen.

Die Druckluft kann durch Verteilungsleitungen bzw. Kanäle zugeführt werden, die in einem den Zylindermantel verschließenden Deckel vorgesehen sein können.

Über die Steuerung der Druckluftzufuhr ist es möglich, die auf dem Spannzylinder montierte Prägeform durch elastische Aufweitung in einer definierten Position festzulegen.

Die Montage der Prägeform auf dem Spannzylinder erfolgt durch Druckluft, die in den Zwischenraum zwischen der Außenseite des Außenzylinders und der Innenseite, der den Außenzylinder dann umgebenden Prägeform zugeführt wird.
Dadurch wird die Prägeform im elastischen Bereich aufgeweitet und kann über ein Luftpolster auf den strukturierten Spannzylinder geschoben werden. Üblicherweise wird ein Druck von 5-20 bar, bevorzugt 8-10 bar verwendet.

Das Festlegen der Prägeform erfolgt dann durch radiales Zusammenziehen der Prägeform nach dem Abschalten der Druckluftzufuhr.
Dabei liegt nun die Prägeform auf der strukturierten Oberfläche des Spannzylinders.
Während des Aufziehens und anschließenden Festlegens der Prägeform auf dem Spannzylinder werden Verunreinigungen, Staubkörner und dergleichen in die Vertiefungen der strukturierten Oberfläche transportiert und gedrückt, sodass Kratzer, Druckstellen und dergleichen vermieden werden.

Dadurch entstehen auch keine Fehlstellen oder Unregelmäßigkeiten im fertigen Endprodukt.

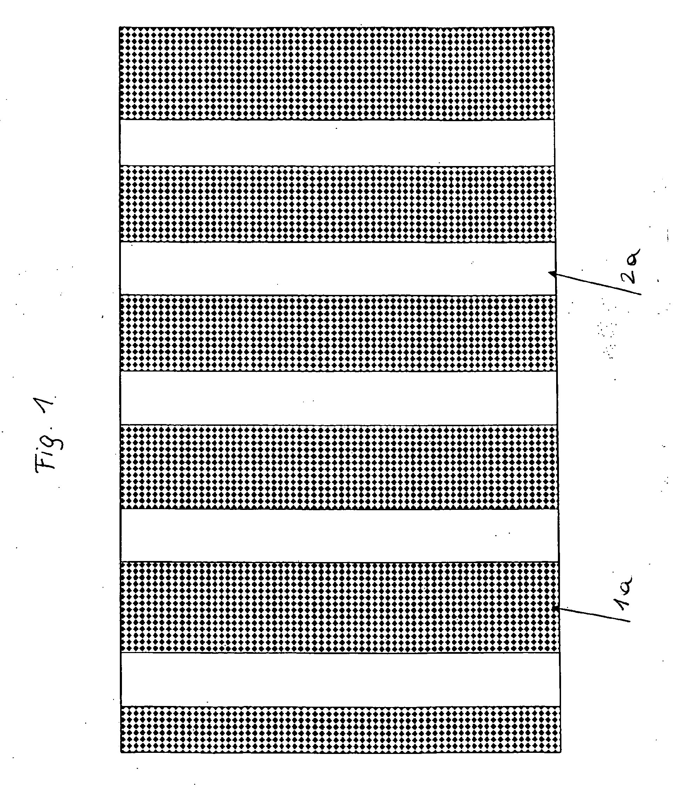

In Fig. 1 ist eine mögliche Oberflächengestaltung eines strukturierten Spannzylinders dargestellt.
Darin bedeuten 1a die Gravur, und 2a die Bereiche, in denen die Druckluft zugeführt wird.

Die Gravur darf den Außenzylinder des Zylinderaufbaus nicht durchstechen. Beispielsweise werden bei einem Gravurverfahren mit einem Diamantstichel Raster von 48-200 l/cm, bevorzugt 60-120 l/cm, besonders bevorzugt 70-80 l/cm und Rasterwinkel von 0-45°, bevorzugt 30-45°, besonders bevorzugt 30-40°, gewählt.
Die Gravurtiefe ist abhängig von der Dicke des Außenzylinders, so wird beispielsweise bei einer Dicke von 20 - 30 mm eine Gravurtiefe von 10-50µm vorteilhaft sein.

Die Steuerung des Steg-Näpfchenverhältnis wird durch Eingabe eines optischen Dichteverhältnisses gesteuert. Üblicherweise beträgt das Steg-Näpfchenverhältnis 1:2, bis 1:4.

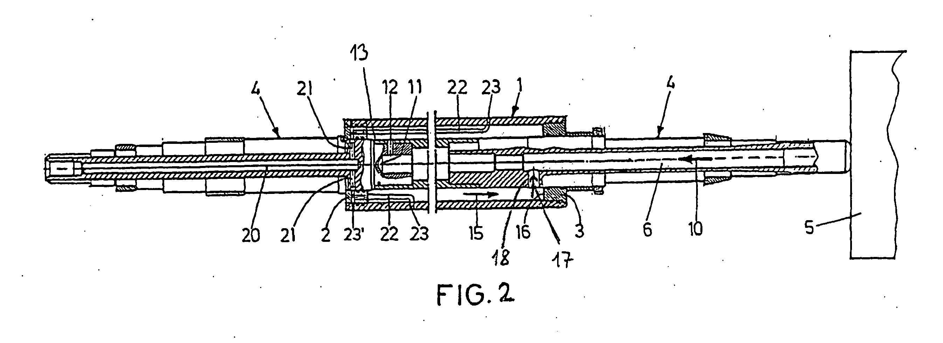

In Fig.2 ist ein Längsschnitt des gravierten Spannzylinders dargestellt.
Ein erfindungsgemäßer, in der Zeichnung dargestellter Spannzylinder umfasst einen Zylindermantel 1 zur Befestigung einer in der Zeichnung nicht dargestellten Prägeform, wobei der Zylindermantel 1 bestehend aus einem Außen und einem Innenzylinder, mit stirnseitigen Deckeln 2, 3 versehen ist, welche von einer drehbar gelagerten Welle durchsetzt werden.

Die Welle 4 weist einen inneren Hohlraum 6 auf, wobei auf der in Fig. 2 rechten Seite durch ein Zuführungsrohr ein weiterer Hohlraum 8 zur Welle 4 ausgebildet ist, wodurch eine kontinuierliche Zirkulation des Temperiermediums gewährleistet ist. Am rechten äußeren Ende der Welle 4 ist eine kommerziell verfügbare, an sich bekannte Zwei-Wege-Einführung vorgesehen.

Dementsprechend ist es möglich ein Temperiermedium, insbesondere Thermoöl, durch ein Zuführungsrohr, den inneren Hohlraum 6 der Welle 4 in Richtung der Pfeile 10 durch die Welle 4 zu leiten, und zwar bis zu dem stirnseitigen Ende 22 des inneren Hohlraums 6, von welchem sich Kanäle 12 radial nach außen erstrecken und in einen Hohlraum 13 münden, der zwischen dem zentralen Abschnitt der Welle 4 und dem Zylindermantel 1 ausgebildet ist. Dort fließt das Temperiermedium den Zylindermantel 1 temperierend in Richtung der Pfeile 15 zurück, bis es die Stimwand 16 des Deckels 3 erreicht, um von diesem Bereich in Richtung des Pfeils 17 durch radiale Bohrungen 18 in den Hohlraum zu gelangen, wo in der Welle 4 zurückgeführt wird.

Es ist dementsprechend möglich, mittels eines in der Zeichnung nicht dargestellten Temperatursensors und einer Regelung den Zylindermantel 1 des Spannzylinders auf einer gewünschten, vorgegebenen Temperatur zu halten.

Die Positionierung der Prägeform an der Außenseite des Zylindermantels wird durch Druckluft bewerkstelligt, die in den Zwischenraum zwischen der Außenseite des Zylindermantels 1 und der Innenseite den Zylindermantel 1 umgebenden Prägeform von der in der Zeichnung linken Seite her zugeführt wird, wie in Fig. 2 dargestellt.

Die Druckluft wird von links durch den Hohlraum 20 eingeführt und durch radiale Bohrungen 21 nach außen umgelenkt, welche in der Welle 4 und dem Deckel 2 ausgebildet sind. In dem Deckel 2 wird die Druckluft auf die Bohrungen 23' und die Leitungen 22 verteilt. Die Leitungen 22 verlaufen mit unterschiedlicher axialer Erstreckung in dem Hohlraum 13. Am Ende jeder der derartigen Leitungen 22 ist eine radiale Bohrung 23 im Zylindermantel 1 vorgesehen.

Durch die Bohrungen 23, 23' ausströmende Druckluft wird die Prägeform im elastischen Bereich aufgeweitet und kann dann über ein Luftpolster auf den Spannzylinder aufgeschoben bzw. dort in ihrer Position korrigiert werden. Das Festlegen erfolgt durch das radiale Zusammenziehen der Prägeform nach dem Abschalten der Druckluftzufuhr. Dadurch einzigartig fehlerfreie Prägestruktur im Endprodukt.

## Patentansprüche

1. Oberflächenstrukturierter Spannzylinder für die Aufnahme und Befestigung einer Prägeform, **dadurch gekennzeichnet, dass** der Spannzylinder eine strukturierte Oberfläche aufweist, die zur Aufnahme von Verunreinigungen wie Staub und Fremdkörper geeignet ist und ein Steg-Näpfchenverhältnis von 1:2 bis 1: 4 aufweist..

2. Spannzylinder nach Anspruch 1, **dadurch gekennzeichnet, dass** er aus einem Zylindermantel besteht, der aus einem Innen- und einem Außenzylinder besteht und im Zylindermantel Bohrungen vorhanden sind, die wenigstens teilweise mit durch das Innere des Spannzylinders führende Leitungen verbunden sind, die an eine Druckluftquelle anschließbar sind und im Inneren des Zylindermantels ein Hohlraum vorgesehen ist, durch den ein auf hohe Temperaturen erhitzbares oder kühlbares Fluid transportiert und spiralförmig um den Innenzylinder geführt wird, das über Zu- und Auslassleitungen umgewälzt wird.

3. Spannzylinder nach Anspruch 2, **dadurch gekennzeichnet, dass** als Fluid Thermoöl verwendet wird.

4. Spannzylinder nach einem der Ansprüche 1 bis 3, **dadurch gekennzeichnet, dass** die Oberfläche mit einem Raster von 48 - 100 l/cm und einem Rasterwinkel von 0 - 45° strukturiert ist.

## Claims

1. Surface-patterned clamping cylinder for receiving and attaching an embossing form, **characterized in that** the clamping cylinder has a patterned surface which is suitable for picking up impurities such as dust and foreign bodies and has a wall-to-cell ratio of 1:2 to 1:4.

2. Clamping cylinder according to Claim 1, **characterized in that** it consists of a cylinder jacket which consists of an inner cylinder and an outer cylinder, and bore holes are present in the cylinder jacket, which are connected at least partially to lines which pass through the interior of the clamping cylinder, which lines can be connected to a pressurized-air source, and a cavity is provided inside the cylinder jacket, through which cavity a fluid, which can be heated to high temperatures or cooled and is recirculated via inlet and outlet lines, is transported and guided helically around the inner cylinder.

3. Clamping cylinder according to Claim 2, **characterized in that** thermal oil is used as the fluid.

4. Clamping cylinder according to one of Claims 1 to 3, **characterized in that** the surface is patterned with a raster of 48 - 100 l/cm and a raster angle of 0 - 45°.

## Revendications

1. Cylindre de serrage à surface structurée pour le logement et la fixation d'une chemise, **caractérisé en ce que** le cylindre de serrage présente une surface structurée qui est appropriée afin de recevoir des impuretés telles que la poussière et les corps étrangers et présente un rapport nervure-alvéole de 1:2 à 1:4.

2. Cylindre de serrage selon la revendication 1, **caractérisé en ce qu'**il se compose d'un corps de cylindre qui se compose d'un cylindre intérieur et d'un cylindre extérieur et des perçages sont présents dans le corps de cylindre, lesquels sont reliés au moins en partie aux conduites traversant l'intérieur du cylindre de serrage, qui peuvent être raccordées à une source d'air comprimé et une cavité est prévue à l'intérieur du corps de cylindre, par laquelle un fluide pouvant être chauffé à des températures élevées ou refroidi est transporté et est guidé en forme de spirale autour du cylindre intérieur, qui circule par le biais de conduites d'alimentation et d'évacuation.

3. Cylindre de serrage selon la revendication 2, **caractérisé en ce que** de l'huile thermique est utilisée comme fluide.

4. Cylindre de serrage selon l'une quelconque des revendications 1 à 3, **caractérisé en ce que** la surface est structurée avec une trame de 48 à 100 l/cm et un angle de trame de 0 à 45°.
